# EUROPEAN PATENT APPLICATION

(11) **EP 4 718 595 A1**
(43) Date of publication of application: **01.04.2026**
(21) Application number: 24168254.1
(22) Date of filing: 03.04.2024
(51) Int. Cl.: H01M 50/204, H01M 50/209, H01M 50/231, H01M 50/24, H01M 50/249, H01M 50/342, H01M 50/367

(54) **BATTERY ASSEMBLY WITH IMPROVED VENTING CONCEPT**

(71) Applicant: Lilium GmbH, 82131 Gauting (DE)
(72) Inventor: FESL, Dominik, 82131 Gauting (DE); ROBERTS, Alistair, 82131 Gauting (DE); PALMIERI, Frank, 82131 Gauting (DE); EECKELEERS, Laurent, 82131 Gauting (DE); MUELLER, Dan, 82131 Gauting (DE)
(74) Representative: Ter Meer Steinmeister & Partner

(57) **Abstract**

A battery assembly (10), in particular for use in an electrical propulsion VTOL aircraft (100), comprises a plurality of battery stacks (12), and a venting system (59) with a venting plenum (62), each battery stack (12) comprising a plurality of battery cells (50) stacked in a stacking direction (V) and a pressure relief safety device (30) configured to discharge gas from the battery stack (12) into the venting plenum (62) when a pressure inside the battery stack (12) exceeds a given threshold, and wherein the battery stacks (12) of the assembly (10) are arranged side by side along a row direction (R) perpendicular to the stacking direction (V), the pressure relief safety device (30) of each stack (12) being provided on a battery stack wall (19) extending in parallel to the stacking direction (V) and to the row direction (R), wherein the battery stack walls (19) are not formed as separate components but as a common continuous wall (21) attached to and connecting all the battery stacks (12) of the assembly (10), and wherein the venting system (59) is a venting cover (60) sealingly attached to and covering the common continuous wall (21).

## Description

The present invention relates to a battery assembly, in particular for use in an electrical propulsion VTOL aircraft, the battery assembly comprising a plurality of battery stacks and a venting system with a venting plenum, each battery stack comprising a plurality of battery cells stacked in a stacking direction and a pressure relief safety device configured to discharge gas from the battery stack into the venting plenum when a pressure inside the battery stack exceeds a given threshold, and wherein the battery stacks of the assembly are arranged side by side along a row direction perpendicular to the stacking direction, the pressure relief safety device of each stack being provided on a battery stack wall extending in parallel to the stacking direction and to the row direction.

Such a battery assembly with the features of the preamble part of claim 1 is known e.g. from EP 4282755 A1.

In the known assembly, each battery stack has a separate stack wall, and the venting system comprises a separate venting tube for each stack.

Gases generated in the unlikely event of a thermal runaway in an affected stack can be discharged by the corresponding pressure relief safety device into the associated venting tube, the venting tubes of all stacks being connected in EP 4282755 A1 at their upper ends to a venting plenum from which the gases can then be discharged through an exhaust outlet opening to an outside of the assembly.

Tests have shown that the pressure and high velocity particles generated in the event of a thermal runaway can exert a lot of stress on the known assemblies.

Against this background, the object of the invention is to increase the stability and to reduce the risk of damage in the event of a thermal runaway.

This object is solved by a battery assembly with the features of claim 1. Preferred embodiments are described in the dependent claims.

According to the invention, the battery stack walls of the different battery stacks on which the pressure relief safety devices are provided are not formed as separate components but as a common continuous wall attached to and connecting all the battery stacks of the assembly, wherein the venting system is a venting cover sealingly attached to and covering the entire common continuous wall. The common continuous wall can in particular be a common continuous front wall covering the stacks from the front side.

By such a common continuous wall attached to the different stacks, the stacks can mutually support each other, improving the overall stack stiffness. In addition, the available space for integrating the pressure relieve safety devices can be enlarged as will be described in more detail below. In comparison to cases with separate stack front walls, less sealing effort is required. The overall weight of the housing per pack can be reduced, improving the performance for the vertical acceleration load, and the performance of post thermal runaway load cases can also be improved.

Finally, the common continuous wall makes it possible to enlarge the volume of the venting plenum and to dispense with the separate venting tubes of the prior art, so that the thermal runaway gases can be injected into a larger volume and thus do not exert as much stress on the structure.

According to a particular embodiment of the invention, the venting cover can be formed in such a manner that the venting plenum covers and connects at least two adjacent battery stacks along the entire height of those two stacks and/or covers and connects all battery stacks of the assembly at least in an upper end region and in a lower end region of the stacks.

Thus, air can freely circulate in the venting plenum between at least two adjacent battery stacks along their entire height or between all battery stacks at least in an upper end region and in a lower end region of the stacks. This configuration considerably increases the volume of the venting plenum and thus decreases the velocity of the injected particles in case of a thermal runaway.

Preferably, the venting cover is formed in one piece, e.g. from a phenolic resin CFRP material.

The venting cover can be sealingly attached to the common continuous wall along a peripheral edge region of the venting cover.

In order to improve the stability of the venting cover, it can also comprise a reinforcing rib protruding towards and sealingly attached to the common continuous wall.

Preferably, the reinforcing rib is arranged in a central region of the venting cover, in particular below an exhaust opening through which gas from the venting plenum can be discharged to the outside of the battery assembly.

Even more preferably, in order to maximize the volume of the venting volume, the venting cover can be attached to the common continuous wall only in the region of the reinforcing rib and in the peripheral edge region of the venting cover.

The venting plenum should be able to take in the volume of hot gases and particles that is produced in the worst-case thermal runaway event. The cross sections and dimensions of the different components such as the burst membranes, the venting plenum, and/or the exhaust opening should be sized accordingly within the given design space.

The venting system is an integrated part for the battery assembly. The function of flame and erosion protection on the inside against hot particles to protect the venting cover from burn during a thermal runaway event can be solved by a phenolic resin CFRP material of the venting cover which has been proven within several thermal runaway tests. Therefore, an additional thermal insulation can be dispensed with.

The design is optimized by stress analysis taking into account crash loads as well as internal pressure during a thermal runaway event. The value that drives the material thickness is the erosion of hot particles. In particular, the venting cover can consist of 4 plies of fabric, with the possibility to lose 1 ply in the event of a thermal runaway so that 3 plies remain for structural integrity.

According to an embodiment of the invention, the common continuous wall can have a multi-layer structure and comprise a structural core layer, two abrasion protection layers covering two opposite sides of the structural core layer, and an electrical insulation layer forming an inside surface of the common continuous wall.

The housing can also comprise a further common continuous wall, in particular a common continuous back wall, attached to and connecting all the battery stacks of the assembly, the common continuous wall and the further common continuous wall being arranged on opposite sides of the row of battery stacks. In particular, the common continuous wall can be a common front wall of the row of battery stacks and the further common continuous wall can be a common rear wall of the row of battery stacks.

The further common continuous wall can also have a multi-layer structure and comprise a structural core layer, an abrasion protection layer provided on an inside surface of the core layer, an electrical insulation layer provided on an inside surface of the abrasion protection layer and an EMI and/or oxygen protection layer forming an outside surface of the further common continuous wall.

The further common continuous wall can comprise provisions for a leak test of the battery compartments.

The pressure relief safety devices used in the known battery assemblies are usually commercially available burst discs.

As the gases generated by an affected battery cell can cause adjacent cells to go into thermal runaway too, it is desirable to group the cells of each stack into different battery modules that are thermally insulated from each other.

To achieve that, a housing of the battery assembly can comprise, for each stack, a plurality of separate subcompartments stacked in the stacking direction, each subcompartment accommodating a predetermined number of the battery cells, for example six battery cells, forming a battery module.

In particular, the housing can comprise, for each stack, two side walls extending perpendicular to the row direction as well as a plurality of barrier component walls extending perpendicular to the stacking direction, each barrier component wall separating two adjacent subcompartments of the stack.

With such a configuration, it is desirable to provide a separate pressure relief means for each battery module or subcompartment.

Commercially available burst discs are however rather heavy, due to the additional components needed to sealingly fix the disc to the housing.

In order to improve a compromise between the requirements of reducing the risk of thermal runaway propagation and of keeping the overall weight of the assembly low, the pressure relief device of each stack comprises, for each subcompartment of that stack, an associated separate venting opening formed in the common continuous wall, the venting opening being closed by a by a burst membrane fixed to and integrated into the common continuous wall by bonding or co-bonding, the burst membrane being configured to give way when an internal pressure inside the corresponding subcompartment exceeds a given threshold value.

In this manner, the different subcompartments or battery modules of a stack accommodating e.g. groups of six battery cells can be better insulated from each other, thus reducing the risk of thermal runaway propagation through the stack.

By integrating the burst membranes with the common continuous wall in the described manner, the overall weight of the assembly can be kept low because the additional components of the commercially available burst disks such as frames, screws, rivets, sealings etc. can be dispensed with, which of course also saves assembly time and effort.

In particular, the battery assembly can be free of any additional mechanical fastening elements such as screws or rivets for attaching the burst membranes to the common continuous wall.

It is noted that the applicant contemplates to protect the aspect of a battery assembly with a separate burst membrane provided for each subcompartment of a stack and integrated into a corresponding wall portion or stack wall independently from the aspects of a common continuous wall for all stacks and a common venting cover. Reference is made to items 1 to 14 attached at the end of this description.

The battery housing and in particular the common continuous wall to be integrated with the burst membranes as well as the venting cover preferably comprise or consist of a carbon fibre reinforced plastic/polymer (CFRP) material, in particular from a phenolic resin CFRP material.

The burst membranes can comprise or be made from a sheet silicate, in particular a sheet silicate from the mica group, another possible material being graphite. Furthermore, the burst membranes can have a thickness from 0.3 mm to 2 mm, preferably from 0.5 mm to 1.2 mm. In tests, burst sheets comprising a mica material and having a thickness from 0.5 mm to 1.2 mm have proven to be advantageous.

According to a particular embodiment of the invention, each burst membrane can be larger than the associated venting opening and can be attached to the common continuous wall from the outside, wherein the wall portion can have a support structure extending within the associated venting opening and supporting the burst membrane from the inside.

In this way and by selecting the form and dimensions of the venting opening, the burst membrane and the support structure in a suitable manner, it can be ensured that the pressure of gas escaping from a given subcompartment does not result in a reverse burst into an adjacent subcompartment.

For example, it can be ensured that an external pressure (in the venting plenum) that would result a given membrane to give way is 6 times larger than an internal pressure (within the battery stack or subcompartment) resulting in the membrane to give way.

Unless indicated otherwise, terms like internal, inside, external, outside and similar always refer to the inside or outside of a housing of the battery assembly without the venting cover.

The support structure can comprise two support bars connecting opposite edges of the associated venting opening. The two support bars can be arranged in a cross configuration. However, in order to optimize the structure with respect to the stresses of normal operation and crash scenarios, calculations show that a configuration of two parallel support bars can be advantageous.

The burst membranes can be held in place even more securely by means of an additional holding layer fixed to the outside of the common continuous wall, the additional holding layer having holes corresponding in position, form and size to the venting openings, and a peripheral edge region of each burst membrane is interposed between the corresponding wall portion and the additional holding layer. In other words, an edge overlap of the holding layer can hold the membrane in position. The additional holding layer can be e.g. an abrasion resistant phenolic resin CFRP layer attached to the common continuous wall by bonding or co-bonding.

Embedding an edge region of the membranes below the additional holding layer reduces the risk that hot gases mixed with particles generated in the event of a thermal runaway will detach the burst membranes in particular on the corners.

As described above, both a mechanical (holding layer) and a chemical mechanism (material connection by bonding/co-bonding) can be provided to hold the burst membranes in place and guarantee their functionality.

Finally, protection is also claimed for an electrical propulsion VTOL aircraft comprising a fuselage defining a vertical direction; at least one electrically driven propulsion motor or a plurality of electrically driven propulsion motors; and at least one battery assembly as described above, the at least one battery assembly being adapted to provide electrical power for driving the propulsion motor(s), wherein the at least one battery assembly is mounted in the fuselage in such a manner that the stacking direction of the battery cell stacks substantially coincides with the vertical direction of the aircraft.

Overall, the invention provides an improved venting concept for a battery assembly in particular for use in an electrical propulsion VTOL aircraft, the assembly comprising a common continuous wall connecting and fixed to all the battery stacks of the assembly while using a common venting cover sealingly attached to the common continuous wall and providing an enlarged venting volume.

In the following, the present invention is described in more detail with reference to particular embodiments of the invention as illustrated in the enclosed drawings.
- **Fig. 1**: is a perspective view of a battery assembly according to a first embodiment of the invention without the venting cover,
- **Fig. 2**: is a simplified front view of the subject of Fig. 1 without the front wall,
- **Fig. 3**: is a simplified cross-sectional view showing the material configuration of the front wall of the housing of the battery assembly of Fig. 1,
- **Fig. 4**: is a simplified cross-sectional view showing the material configuration of the back wall of the housing of the battery assembly of Fig. 1,
- **Fig. 5**: is a perspective view of the back wall of the housing of the battery assembly of Fig. 1
- **Fig. 6**: is a partial sectional view of the front wall of the housing of the battery assembly of Fig. 1,
- **Fig. 7**: is a simplified perspective view of parts of the housing of the battery assembly of Fig. 1, and
- **Fig. 8**: is a simplified perspective view of parts of the housing of the battery assembly according to a second embodiment.
- **Fig. 9**: is an enlarged front view of a part of the front wall of the housing of the battery assembly according to the second embodiment of the invention.
- **Fig. 10**: is a perspective view of the subject of Fig. 1 with an attached venting cover, the rest of the battery assembly illustrated in a simplified manner,
- **Fig. 11**: is a perspective view on the front side of the venting cover (a) and on the back side of the venting cover (b),
- **Fig. 12**: is a schematic side view of an aircraft provided with a plurality of battery assemblies according to the present invention; and
- **Fig. 13**: illustrates the mounting configuration of a battery assembly according to an embodiment of the invention with respect to the aircraft fuselage (a) and to the aircraft fairings (b).

It is noted that in order to improve readability, if a figure comprises several identical features, only a single or a few selected of these identical features is or are provided with reference signs. Furthermore, not all features of each figure are provided with a reference sign but only those that are necessary or useful for explaining the respective drawing.

Corresponding or identical features in different embodiments are denoted by the same reference sign. Additional embodiments are mainly described in so far as they differ from the first embodiment. Otherwise, reference is made to the description of the first embodiment.

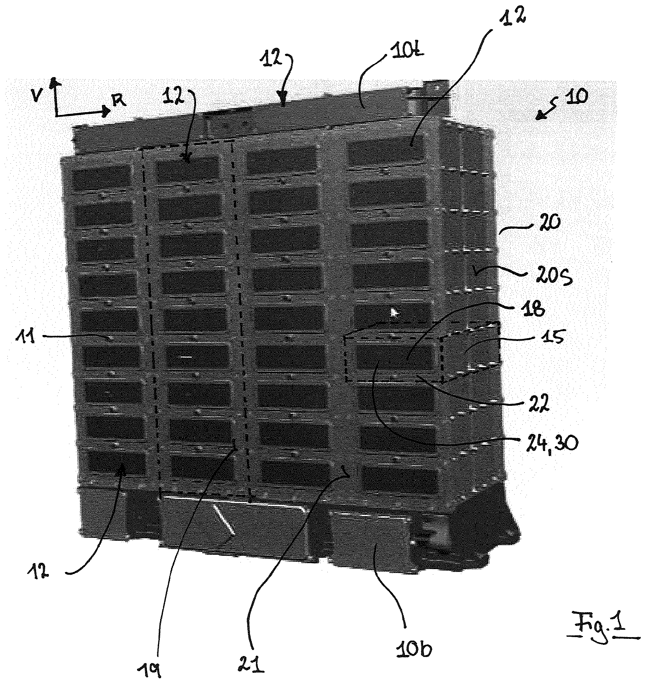

The battery assembly 10 according to a first exemplary embodiment of the invention as illustrated in Fig. 1 comprises four battery stacks 12 accommodated in a housing 20 and arranged side by side along a row direction R.

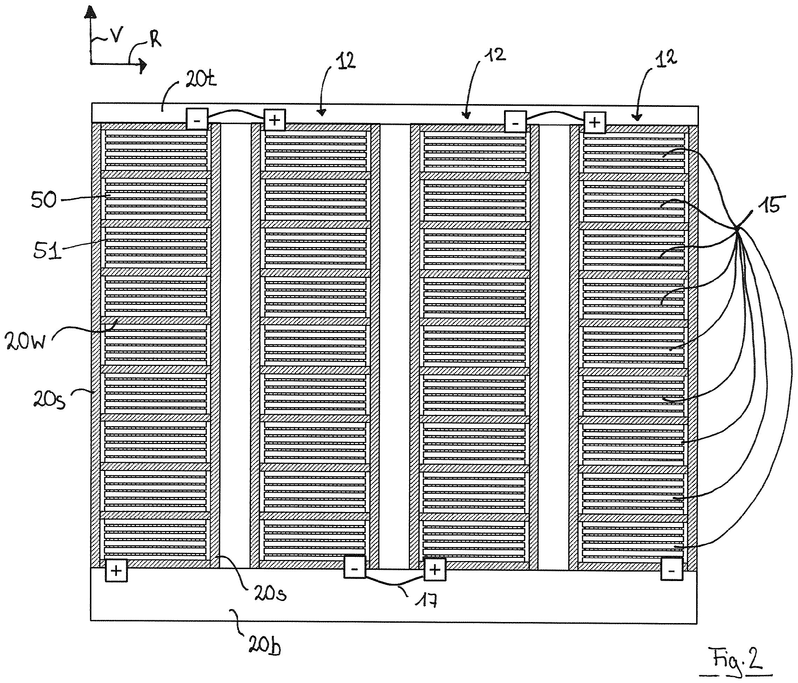

A front side of the housing 20 is formed by a common continuous front wall 21 which is removed in Fig. 2 in order to show the interior structure of the housing 20 comprising, for each of the four battery stacks 12, nine subcompartments 15 stacked in a stacking direction V perpendicular to the row direction R, each subcompartment 15 accommodating six individual battery cells 50 stacked in the stacking direction V.

It is noted that the number of the battery stacks per assembly, of the subcompartments per stack and of the battery cells per subcompartment is only given as a non-limiting example.

The individual cells 50 of each stack 12 are electrically interconnected in a conventional manner that is not shown, and the electrical connection 17 between the stacks 15 is only schematically indicated in Fig. 2.

The cells 50 of a stack 12 can be compressed along the stacking direction V and foam pads 51 can be provided between adjacent cells 50 in each stack 12.

The housing 20 of the battery assembly 10 comprises a common bottom wall 20b and a common top wall 20t for all stacks 12 and two stack side walls 20s per stack as well as a plurality of horizontal barrier component walls 20w separating adjacent subcompartments 15 of a stack 12.

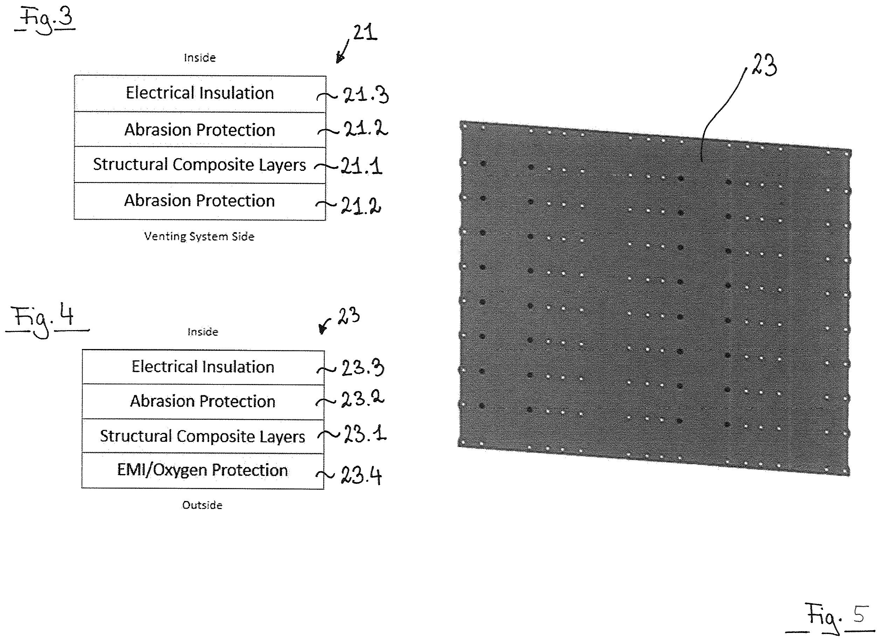

As will be explained later in more detail, in the illustrated example, the housing 20 also comprises a common continuous front wall 21 (cf. Fig. 1) and a common continuous back wall 23 (cf. Fig. 5) for all stacks 12.

The position of an exemplary subcompartment 15 is indicated by means of dashed lines in Fig. 1. It is possible although not covered by the present claims to provide separate stack walls 19 indicated in dotted and dashed lines in Fig. 1.

As shown in Fig. 1, for each subcompartment 15 of each stack 12 of the assembly 10, a front wall portion 22 of the housing 20 extending in parallel to the stacking direction V and to the row direction R is fixed to this subcompartment 15 so that it sealingly closes this subcompartment 15 from a front side. Furthermore, the front wall portion 22 has a venting opening 18 associated to the subcompartment 15, the venting opening 18 being closed by a burst membrane 24 configured to give way when an internal pressure inside the subcompartment 15 exceeds a given threshold.

The arrangement of burst membranes 24 thus forms a pressure relief safety device 30 of the battery assembly 10. In the illustrated example, there are nine subcompartments in each of the four stacks and thus 4 x 9 = 36 separate burst membranes 24.

In the event of a thermal runaway in a given subcompartment 15, the corresponding burst membrane 24 gives way and allows the hot gases generated in the subcompartment 15 to escape into an adjacent venting plenum as described in more detail below.

It is noted that fastening members used to fix the front wall 21 to the barrier component walls 20w visible in fig. 2 are denoted with the reference sign 11 in Fig. 1.

Fig. 3 illustrates a possible material configuration of the common continuous front wall 21 of the battery assembly of Fig. 1. As shown, the front wall 21 can have a multi-layer structure comprising a structural core layer 21.1 which can include a plurality of structural composite layers selected in order to withstand the mechanical load to be expected during normal operation (flight) and in thermal runaway cases. Two abrasion protection layers 21.2 can be provided on two opposite sides of the structural core layer 21.1 in order to provide protection from abrasion during thermal runaway, and an electrical insulation layer 21.3, e.g. comprising woven glass fibers, can be provided as an inside surface of the common continuous front wall 21 in order to provide electrical insulation.

A common continuous back wall 23 of the battery assembly 10 as shown in Fig. 4 and Fig. 5 can be configured in a similar manner with a structural core layer 23.1, an abrasion protection layer 23.2 and an electrical insulation layer 23.3, the configuration of the back wall 23 differing from that of the front wall 21 mainly in that an outside surface of the back wall 23 can be formed by an EMI/oxygen protection layer 23.4 instead of an abrasion protection layer, because with the present configuration, hot gases comprising abrasive particles generated during thermal runaway are discharged via the front wall 21 so that the probability of the outside of the back wall coming into contact with abrasive particles is rather low.

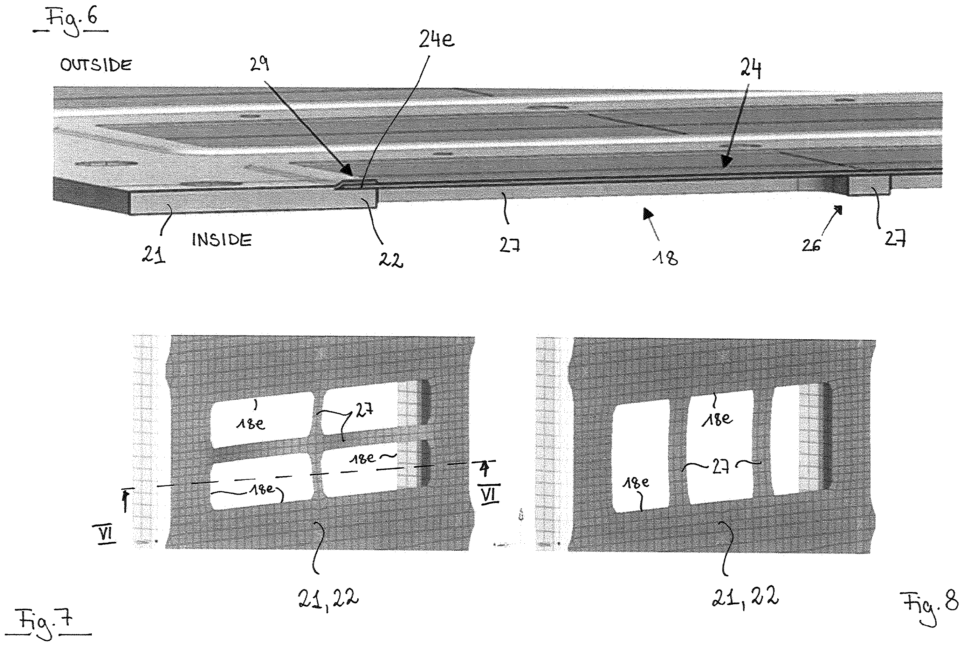

The partial sectional view of Fig. 6 illustrates details of the burst membrane attachment according to the present embodiment, the sectional plane of Fig. 6 corresponding to the plane VI-VI indicated in Fig. 7.

The burst membrane 24, for example a thin rigid mica sheet resistant to erosion, is a bit larger than the associated venting opening 18 and attached to the corresponding front wall portion 22 from the outside by bonding or co-bonding, thus integrating the burst membranes 24 with the front wall 21 without the need for additional seals or fastening members such as screws or rivets required for commercially available burst discs.

The front wall portion 22 has a support structure 26 extending within the venting opening 18 and supporting the burst membrane 24 from the inside of the housing. In the examples of Figs. 6-9, the support structure comprises two support bars 27 connecting opposite edges 18e of the associated venting opening 18, the support bars of the example of Figs. 6-7 being arranged in a cross configuration and the support bars of the example of Figs. 8-9 being arranged in a parallel configuration.

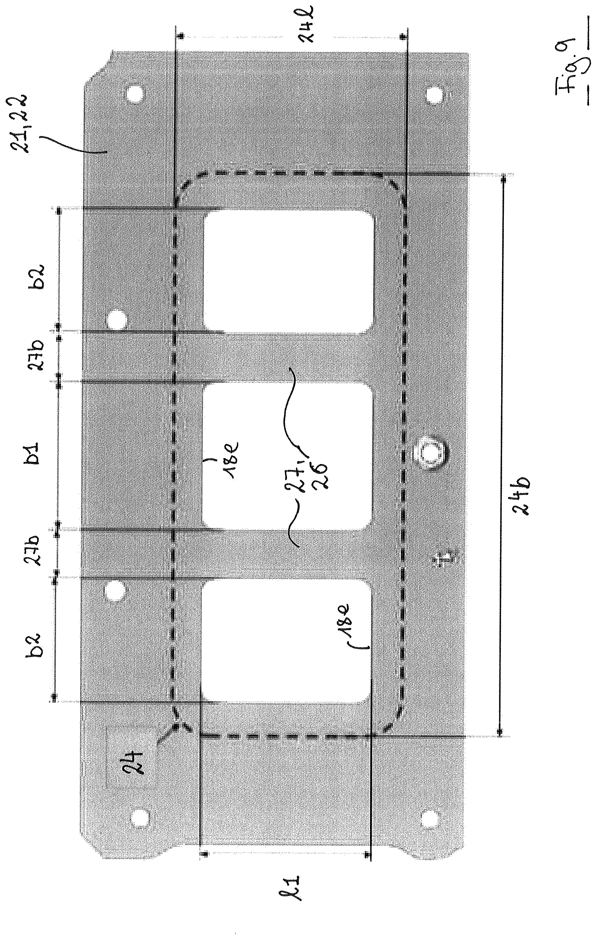

By attaching the burst membrane 24 from the outside and supporting it from the inside, and by suitably selecting the form and dimensions, e.g. b1, b2, l1 of the venting opening 18, the dimensions e.g. 24b, 24l of the burst membrane 24 and the form and dimensions e.g. 27b of the support structure 26 (cf. Fig. 9), desired different burst pressures depending on the burst direction can be achieved, thus avoiding or reducing the risk of reverse bursts into an adjacent compartment in the event of a thermal runaway due to an elevated pressure in a venting plenum region outside of the housing.

In order to hold the burst membranes 24 even more securely in position, an additional holding layer 29 can optionally be fixed to the outside of the front wall 21 or the front wall portions 22 as illustrated in Fig. 6, in particular by bonding or co-bonding, the additional holding layer 29 having holes corresponding in position, form and size to the venting openings 18, wherein a peripheral edge region 24e of the burst membrane 24 is interposed between the associated front wall portion 22/front wall 21 and the additional holding layer 29. On the inside of the front wall 21, a thermal insulation layer can be applied (not shown).

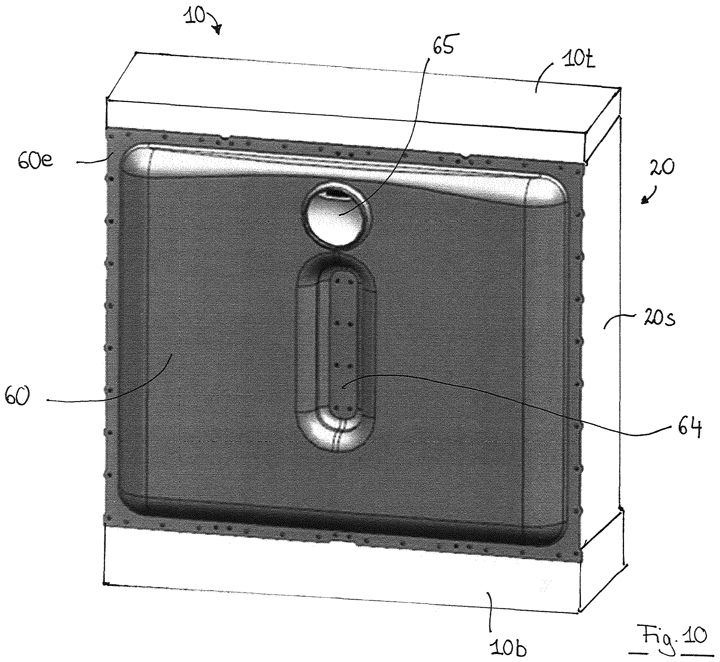

If the burst membrane 24 of an affected subcompartment 15 gives way in the event of a thermal runaway, the resulting hot gases are discharged through the venting opening 18 into a venting plenum 62 defined by a venting cover 60 attached to the front wall 21 of the housing 20 of the battery assembly 10 as illustrated in Fig. 10. From the venting plenum 62, the gases can be discharged through an exhaust opening 65 arranged horizontally in the middle of an upper region of the venting cover 60. A separate burst disc (not shown) can be provided in or at the exhaust opening 65, e.g. a burst disc comprising a mica or graphite material and having a thickness of between 0.6 and 1 mm, in particular about 0.8 mm.

As the different subcompartments 15 of each stack 12 are thermally insulated from each other and thermal runaway gases generated in an affected subcompartment 15 can be quickly diverted into the large venting plenum 62, a propagation of the thermal runaway through the stack can be effectively avoided.

As shown in Fig. 10, the venting cover 60 can be formed in one piece and can be attached in a peripheral edge region 60e of the venting cover to the front wall 21 of the housing 20.

For technical reasons, with the exception of the venting cover 60, the rest of the assembly 10 is illustrated in Fig. 10 only in a very simplified manner, in particular the housing 20 of the battery assembly 10 as well as a top structure 10t and a bottom structure 10b of the assembly, but all these simplified components are supposed to represent the corresponding components in Fig. 1.

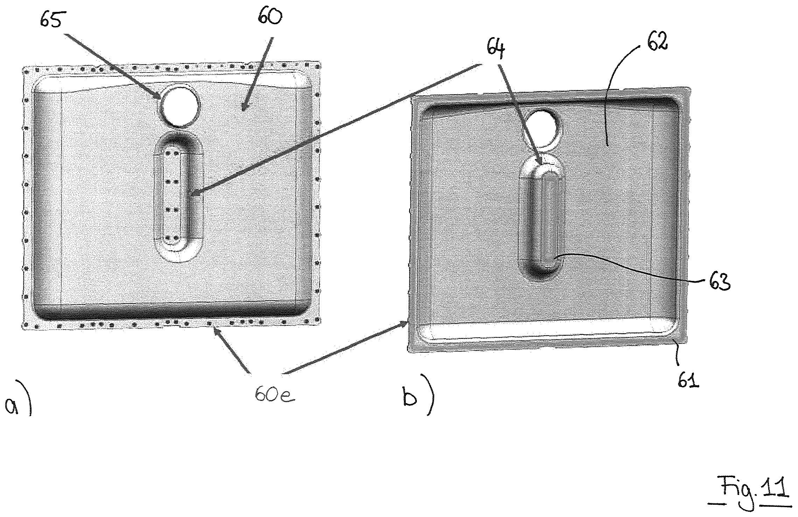

The venting cover 60 illustrated separately in Fig. 11 as seen from the front side in subset 11 a) and as seen from the back side in subset 11b) is formed in such a manner that the venting plenum 62 connects the two battery stacks 15 on the left side in Fig. 10 along their entire height and also connects the two battery stacks 15 on the right side in Fig. 10 along their entire height. Furthermore, the venting plenum 62 also connects all four battery stacks of the assembly both in an upper end region and in a lower end region of the stacks.

Thus, the venting plenum 62 of the venting cover 60 of the present embodiment can be considerably larger than in the case of the venting cover of EP4282755A1 providing a separate "venting tube" for each stack, the venting tubes only being connected in an upper end region of the stacks.

The only obstacle for gases in the venting plenum 62 of the present embodiment is formed by a reinforcing rib 64 protruding towards and sealingly attached to the common continuous front wall 21, the reinforcing rib 64 being arranged in a central region of the venting cover 60 below the exhaust opening 65. The reinforcing rib 64 can be provided in order to improve the stiffness and/or stability of the venting cover 60. Additional sealing components provided in the edge region 60e or in the region of the reinforcing rib 64 are denoted by reference signs 21 and 63 in Fig. 11.

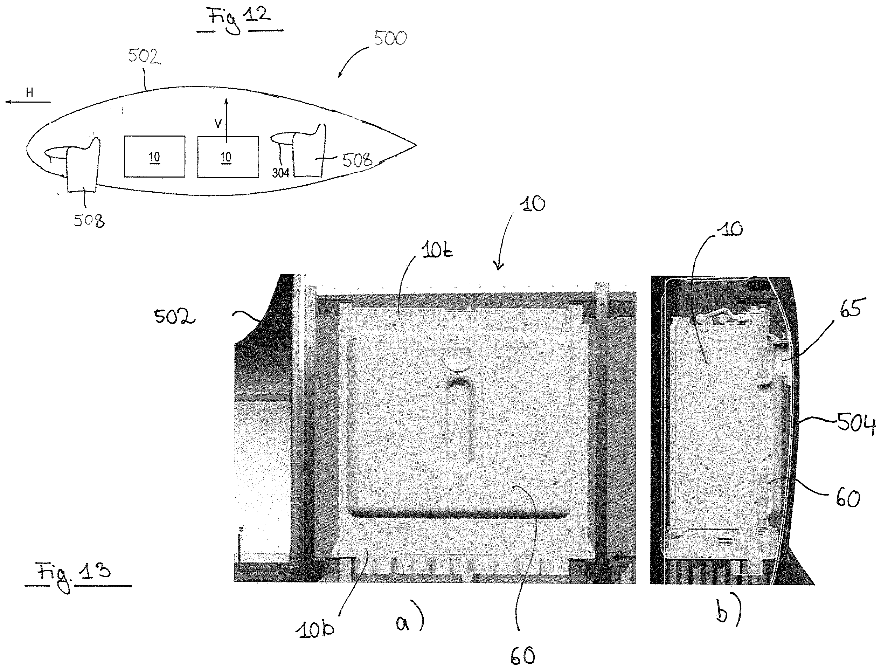

Fig. 12 illustrates an electrical propulsion VTOL aircraft 500 according to an embodiment of the invention in a very simplified manner, the aircraft 500 comprising a fuselage 502 defining a vertical direction of the aircraft, a plurality of electrically driven propulsion motors 508 and battery assemblies 10 according to an embodiment of the invention as described herein, wherein the battery assemblies 10 are mounted to the fuselage 502 in such a manner that the stacking direction V of the battery cell stacks 15 substantially coincides with the vertical direction of the aircraft 500.

Finally, Fig. 13 illustrates the mounting configuration of a battery assembly 10 with respect to the fuselage 502 (a) and with respect to the fairings 504 (b) of the aircraft. Subset (b) shows that thermal runaway gases can be discharged from the venting plenum through the exhaust opening 65 directly to the exterior of the aircraft 500.

It is noted that the applicant also contemplates protecting the subject-matter defined in the form of items listed below.

**Item 1:** A battery assembly (10), in particular for use in an electrical propulsion VTOL aircraft (100), the battery assembly (10) comprising a plurality of battery stacks (12), a housing (20) accommodating the plurality of battery stacks, and a pressure relief safety device (30),
each battery stack (12) comprising a plurality of battery cells (50) stacked in a stacking direction (V), and wherein the battery stacks (12) are arranged side by side along a row direction (R) perpendicular to the stacking direction (V),
**characterized in that,** for each battery stack (12), the housing (20) comprises a plurality of separate subcompartments (15) stacked in the stacking direction (V), each subcompartment (15) accommodating a predetermined number of the battery cells (50), and wherein, for each subcompartment (15) of each stack (12), a wall portion (22) of the housing (20) extending in parallel to the stacking direction (V) and to the row direction (R) and sealingly closing the subcompartment (15) from one side has an associated separate venting opening (18), each venting opening (18) being closed by a burst membrane (24) fixed to and integrated into the wall portion (22) by bonding or co-bonding, the burst membrane (24) being part of the pressure relief safety device (30) and being configured to give way when an internal pressure inside the corresponding subcompartment (15) exceeds a given threshold value.

**Item 2:** The battery assembly (10) according to item 1, wherein the burst membranes (24) comprise or consist of a sheet silicate, in particular from the mica group, and/or the burst membranes (24) have a thickness from 0.3 mm to 2 mm, preferably from 0.5 mm to 1.2 mm.

**Item 3:** The battery assembly (10) according to item 1 or 2,
wherein each burst membrane (24) is larger than the associated venting opening (18) and is attached to the corresponding wall portion (22) from the outside,
wherein the wall portion (22) has a support structure (26) extending within the associated venting opening (18), the support structure (26) supporting the burst membrane (24) from the inside of the housing (20).

**Item 4:** The battery assembly (10) according to item 3, wherein the support structure (26) comprises two support bars (27) arranged in parallel or in a cross configuration, each support bar (27) connecting opposite edges (18e) of the associated venting opening (18).

**Item 5:** The battery assembly (10) according to any of the preceding items, wherein an additional holding layer (29) is fixed to the outside of the wall portions, the additional holding layer (29) having holes corresponding in position, form and size to the venting openings (18), and wherein each burst membrane (24) is interposed in a peripheral edge region (24e) of the burst membrane (24) between the associated wall portion (22) and the additional holding layer (29).

**Item 6:** The battery assembly (10) according to any of the preceding items,
wherein, for each stack (12), the wall portions (22) sealingly closing all subcompartments (15) of that stack from one side are not formed separately but are part of a common continuous stack wall (19),
or wherein the wall portions (22) sealingly closing all subcompartments (15) of all stacks (12) of the battery assembly (10) from one side are not formed separately but are part of a common continuous wall (21), in particular a common continuous front wall (21).

**Item 7:** The battery assembly (10) according to item 6,
wherein the common continuous wall (21) has a multi-layer structure and comprises a structural core layer (21.1), two abrasion protection layers (21.2) covering two opposite sides of the structural core layer (21.1) and an electrical insulation layer (21.3) forming an inside surface of the common continuous wall (21),

**Item 8:** The battery assembly (10) according to any of the preceding items,
wherein the housing (12) comprises a further common continuous wall (23), in particular a common continuous back wall (23), fixed to and closing all the subcompartments (15) of all the battery stacks (12) in particular from a rear side.

**Item 9:** The battery assembly (10) according to item 8,
wherein the further common continuous back wall has a multi-layer structure and comprises a structural core layer (23.1), an abrasion protection layer (23.2) provided on an inside surface of the core layer (23.1), an electrical insulation layer (23.3) provided on an inside surface of the abrasion protection layer (23.2) and an EMI and/or oxygen protection layer (23.4) provided on an outside surface of structural core layer (23.1).

**Item 10:** The battery assembly (10) according to any of the preceding items,
the battery assembly (10) furthermore comprising a venting cover (60) sealingly attached to the housing (20) and defining a venting plenum (62) between a region of the housing (20) comprising the burst membranes (24) and the venting cover (60), the venting cover (60) furthermore comprising an exhaust opening (65) through which gas can be discharged from the venting plenum (62) to the outside of the battery assembly (10),
wherein the venting cover (60) is formed in such a manner that the venting plenum (62) connects at least two adjacent battery stacks (15) along their entire height and/or connects all battery stacks (15) at least in an upper end region (15e1) and in a lower end region (15e2) of the stacks (15).

**Item 11:** The battery assembly (10) according to item 10,
wherein the venting cover (60) is formed in one piece and is sealingly attached to the housing (20), in particular to the common continuous wall (21), along a peripheral edge region (60e) of the venting cover (60).

**Item 12:** The battery assembly (10) according to item 11 or 10,
wherein the venting cover (60) comprises a reinforcing rib (64) protruding towards and sealingly attached to the housing (20).

**Item 13:** The battery assembly (10) according to item 12,
wherein the reinforcing rib (64) is arranged in a central region of the venting cover (60), in particular below the exhaust opening (65).

**Item 14:** An electrical propulsion VTOL aircraft (500), comprising:
a fuselage (502) defining a vertical direction of the aircraft (500);
   a plurality of electrically driven propulsion motors (508); and
at least one battery assembly (10) according to any of the preceding items, the battery assembly (10) being adapted to provide electrical power for driving the propulsion motors (508), wherein the at least one battery assembly (10) is mounted in the fuselage (502) in such a manner that the stacking direction (V) of the battery cell stacks (15) substantially coincides with the vertical direction of the aircraft (500).

## Claims

1. A battery assembly (10), in particular for use in an electrical propulsion VTOL aircraft (100), the battery assembly (10) comprising a plurality of battery stacks (12), and a venting system (59) with a venting plenum (62),
each battery stack (12) comprising a plurality of battery cells (50) stacked in a stacking direction (V) and a pressure relief safety device (30) configured to discharge gas from the battery stack (12) into the venting plenum (62) when a pressure inside the battery stack (12) exceeds a given threshold,
and wherein the battery stacks (12) of the assembly (10) are arranged side by side along a row direction (R) perpendicular to the stacking direction (V),
the pressure relief safety device (30) of each stack (12) being provided on a battery stack wall (19) extending in parallel to the stacking direction (V) and to the row direction (R),
**characterized in that** the battery stack walls (19) are not formed as separate components but as a common continuous wall (21) attached to and
connecting all the battery stacks (12) of the assembly (10), and wherein the venting system (59) is a venting cover (60) sealingly attached to and covering the common continuous wall (21).

2. The battery assembly according to claim 1, wherein the venting cover (60) is formed in such a manner that the venting plenum (62) covers and connects at least two adjacent battery stacks (15) along their entire height and/or covers and connects all battery stacks (15) at least in an upper end region and in a lower end region of the stacks (15).

3. The battery assembly (10) according to any of the preceding claims,
wherein the venting cover (60) is sealingly attached to the common continuous wall (21) along a peripheral edge region (60e) of the venting cover (60).

4. The battery assembly (10) according to any of the preceding claims, **characterized in that** the venting cover (60) comprises a reinforcing rib (64) protruding towards and sealingly attached to the common continuous wall (21).

5. The battery assembly (10) according to claim 4,
**characterized in that** the reinforcing rib (64) is arranged in a central region of the venting cover (60), in particular below an exhaust opening (65) through which gas from the venting plenum (62) can be discharged to the outside of the battery assembly (10).

6. The battery assembly (10) according to any of the preceding claims,
wherein the common continuous wall (21) has a multi-layer structure and comprises a structural core layer (21.1), two abrasion protection layers (21.2) covering two opposite sides of the structural core layer (21.1) and an electrical insulation layer (21.3) forming an inside surface of the common continuous wall (21),

7. The battery assembly (10) according to any of the preceding claims,
comprising a further common continuous wall (23) attached to and connecting all the battery stacks (12) of the assembly (10), the common continuous wall (21) and further common continuous wall (23) being arranged on opposite sides of the row of battery stacks (12).

8. The battery assembly (10) according to claim 7,
wherein the further common continuous wall (23) has a multi-layer structure and comprises a structural core layer (23.1), an abrasion protection layer (23.2) provided on an inside surface of the core layer (23.1), an electrical insulation layer (23.3) provided on an inside surface of the abrasion protection layer (23.2) and an EMI and/or oxygen protection layer (23.4) provided on an outside surface of the structural core layer (23.1).

9. The battery assembly (10) according to any of the preceding claims,
wherein, for each battery stack (12), a housing (20) of the assembly comprises a plurality of separate subcompartments (15) stacked in the stacking direction (V), each subcompartment (15) accommodating a predetermined number of the battery cells (50), and wherein the common continuous wall (21) is fixed to and sealingly closes each subcompartment (15) from one side.

10. The battery assembly (10) according to claim 9, wherein the pressure relief safety device (30) of each stack comprises, for each subcompartment (15) of that stack, an associated venting opening (18) formed in the common continuous wall (21), the venting opening (18) being closed by a burst membrane (24) fixed to and integrated into the common continuous (22) wall by bonding or co-bonding, the burst membrane (24 being configured to give way when an internal pressure inside the corresponding subcompartment (15) exceeds a given threshold value.

11. The battery assembly (10) according to claim 10,
wherein the burst membranes (24) comprise or consist of a sheet silicate, in particular from the mica group, and/or the burst membranes (24) have a thickness from 0.3 mm to 2 mm, preferably from 0.5 mm to 1.2 mm.

12. The battery assembly (10) according to claim 10 or 11,
wherein each burst membrane (24) is larger than the associated venting opening (18) and is attached to the common continuous wall (21) from the outside,
wherein the wall portion (22) has a support structure (26) extending within the associated venting opening (18), the support structure (26) supporting the burst membrane (24) from the inside.

13. The battery assembly (10) according to claim 12, wherein the support structure (26) comprises two support bars (27) arranged in parallel or in a cross configuration, each support bar (27) connecting opposite edges (18e) of the associated venting opening (18).

14. The battery assembly (10) according to any of the preceding claims, wherein an additional holding layer (29) is fixed to the outside of the common continuous wall (21), the additional holding layer (29) having holes corresponding in position, form and size to the venting openings (18), and wherein each burst membrane (24) is interposed in a peripheral edge region (24e) of the burst membrane (24) between the common continuous wall and the additional holding layer (29).

15. An electrical propulsion VTOL aircraft (500), comprising:
a fuselage (502) defining a vertical direction of the aircraft (500);
- at least one electrically driven propulsion motor (508); and
- at least one battery assembly (10) according to any of the preceding claims, the battery assembly (10) being adapted to provide electrical power for driving the propulsion motor (508), wherein the at least one battery assembly (10) is mounted in the fuselage (502) in such a manner that the stacking direction (V) of the battery cell stacks (15) substantially coincides with the vertical direction of the aircraft (500).
